# EUROPÄISCHE PATENTSCHRIFT

(11) **EP 3 065 576 B1**
(45) Veröffentlichungstag und Bekanntmachung des Hinweises auf die Patenterteilung: **20.03.2019**
(21) Anmeldenummer: 14741554.1
(22) Anmeldetag: 15.07.2014
(51) Int. Cl.: A23P 20/00, A23G 3/20, A23G 3/22

(54) **VORRICHTUNG ZUM ÜBERZIEHEN VON PRODUKTEN**
DEVICE FOR COATING PRODUCTS
DISPOSITIF D'ENROBAGE DES PRODUITS

(30) Priorität: 08.11.2013 DE 102013018774
(43) Veröffentlichungstag der Anmeldung: 14.09.2016
(73) Patentinhaber: Bühler GmbH, 74211 Leingarten (DE)
(72) Erfinder: SCHIERITZ, H. Peter, 20257 Hamburg (DE); STUTE, Klaus, 22848 Norderstedt (DE)
(74) Vertreter: Thum, Bernhard
(86) Internationale Anmeldenummer: PCT/EP2014/065108
(87) Internationale Veröffentlichungsnummer: WO 2015/067383

(56) Entgegenhaltungen:
- DE-A1- 3 710 539
- DE-A1-102006 054 570
- DE-A1-102011 008 148
- DE-C1- 4 209 966
- US-A- 1 661 460

## Beschreibung

Die vorliegende Erfindung betrifft eine Vorrichtung zum Überziehen von Produkten, insbesondere Lebensmittelprodukten mit einer fließfähigen Überzugsmasse.
Vorrichtungen zum Überziehen von Produkten, so genannte Überziehmaschinen, werden beispielsweise eingesetzt, um eine in einzelne Riegel geformte Lebensmittelmasse mit einer Überzugsmasse, wie z. B. Schokolade, zu überziehen, um beispielsweise Kekse, Müsliriegel oder Schokoriegel herzustellen.
Derartige Überziehmaschinen sind aus dem Stand der Technik bekannt. Zumeist umfassen die bekannten Überziehmaschinen ein Oberteil und ein die eigentliche Überziehvorrichtung bildendes Unterteil. Das Unterteil bzw. die Überziehvorrichtung ist relativ zu dem Oberteil verlagerbar, da sich in dem Unterteil die mit der Überzugsmasse in Berührung kommenden Komponenten, wie z. B. die Überziehstation und das Förderband, befinden. Um die Überziehvorrichtung bzw. deren Komponenten reinigen zu können, muss die Überziehvorrichtung aus der Produktionslinie und damit weg von dem Oberteil verlagert werden, d.h. kann beispielsweise zu einer Reinigungsstation gebracht werden.
Auch bei einem Wechsel der Überzugsmasse, d.h. beispielsweise bei einem Wechsel von dunkler Schokolade auf weiße Schokolade, ist es notwendig, die Überziehvorrichtung von der Produktionsposition an dem Oberteil wegzubewegen, um die Überziehvorrichtung reinigen und mit einer neuen Überzugsmasse ausstatten zu können.

Aus der Druckschrift DE 1020110008 148 A1 ist eine verfahrbare Maschine zum Überziehen von essbaren Produktstücken bekannt. Die Überziehvorrichtungen sind häufig mit Rollen oder Rädern ausgestattet, um die Überziehvorrichtung aus der Produktionsposition bzw. von der Produktionslinie weg verlagern zu können. Für die Produktion bzw. das Überziehen der Lebensmittelprodukte ist jedoch ein sicherer Stand der Überziehvorrichtung in der Produktionsposition notwendig. Um diesen sicheren Stand zu gewährleisten, sind die Überziehvorrichtungen mit Lagerfüßen ausgestattet. Um das Unterteil bzw. die Überziehvorrichtung verlagern zu können, müssen dementsprechend entweder die Räder bzw. Rollen oder die Lagerfüße bewegt werden, sodass die Überziehvorrichtung über die Rollen bzw. Räder aus der Produktionslinie gefahren werden kann. Zur Bewegung der Lagerfüße oder der Rollen bzw. Räder werden häufig Schraubspindelanordnungen oder Hydraulikeinheiten verwendet, die die Räder in Kontakt mit dem Untergrund bringen.

Bei Verwendung von Schraubspindelanordnungen ist die Verlagerung der Überziehvorrichtung zwischen der Produktionsposition und einer Position, in der die Überziehvorrichtung verlagerbar ist, mit einem relativ großen Zeitaufwand verbunden.

Durch eine oder mehrere Hydraulikeinheiten zur Überführung der Überziehvorrichtung von einer Produktionsposition in eine Position, in der die Überziehvorrichtung verlagerbar ist, wird der Aufbau und die Steuerung der Überziehvorrichtung erheblich komplexer.

Es ist eine Aufgabe der vorliegenden Erfindung, eine Vorrichtung zum Überziehen von Produkten, insbesondere Lebensmittelprodukten, mit einer fließfähigen Überzugsmasse bereitzustellen, die schnell und einfach von einer Produktionsposition in eine Bewegungsposition oder umgekehrt verlagerbar ist, und dennoch einen einfachen Aufbau aufweist.

Diese Aufgabe wird mit einer Vorrichtung zum Überziehen von Produkten mit den in Patentanspruch 1 angegebenen Merkmalen gelöst.

Weitere Ausführungsformen der Erfindung sind in den abhängigen Ansprüchen angegeben.

Die erfindungsgemäße Vorrichtung zum Überziehen von Produkten umfasst wenigstens einen Maschinenrahmen, über den sich die Vorrichtung in einer Produktionsposition an einem Untergrund abstützt und wenigstens eine Hebelanordnung. Die Hebelanordnung ist derart ausgebildet, dass die Vorrichtung zwischen der Produktionsposition und einer Bewegungsposition verlagerbar ist. In der Bewegungsposition ist die Vorrichtung dann relativ bewegbar. In der Bewegungsposition kann die Überziehvorrichtung weg von der Produktionsposition und der Produktionslinie beispielsweise zu einer Reinigungsstation und zurück gebracht werden.

Erfindungsgemäß ist, anders als beim Stand der Technik, bei dem Schraubspindelanordnungen und Hydraulikeinheiten verwendet werden, eine Hebelanordnung vorgesehen, mittels derer die Vorrichtung schnell und einfach zwischen einer Produktionsposition und einer Bewegungsposition verlagerbar ist. Durch eine Betätigung der wenigstens einen Hebelanordnung, kann die Vorrichtung schnell und einfach aus der Produktionsposition in die Bewegungsposition oder zurück verlagert werden. Der Aufbau der Vorrichtung oder deren Steuerung wird demnach durch die wenigstens eine Hebelanordnung nicht weiter verkompliziert. Die Hebelanordnung kann beispielsweise in einer ersten Richtung, um die Vorrichtung von der Produktionsposition in die Bewegungsposition zu verlagern, und in einer zweiten Richtung betätigt werden, um die Vorrichtung von der Bewegungsposition in die Produktionsposition zu überführen. Die Steuerung und Handhabung der wenigstens einen Hebelanordnung ist demnach relativ einfach.

Gemäß einer Ausführungsform kann die wenigstens eine Hebelanordnung die Vorrichtung in der Bewegungsposition abstützen, d. h. in der Bewegungsposition stützt nicht mehr der Maschinenrahmen die Vorrichtung ab, sondern die Hebelanordnung, um eine Relativbewegung zu ermöglichen
Die wenigstens eine Hebelanordnung kann die Vorrichtung über eine Schwenkbewegung zwischen der Produktionsposition und der Bewegungsposition verlagern. Bei einer Betätigung der Hebelanordnung führt diese eine Schwenkbewegung aus, die dazu führt, dass die Vorrichtung sich nicht mehr über den Maschinenrahmen beispielsweise an einem Hallenboden einer Produktionshalle abstützt, sondern in der Bewegungsposition von der Hebelanordnung abgestützt wird. Auch in umgekehrter Richtung, d.h. von der Bewegungsposition in die Produktionsposition führt die wenigstens eine Hebelanordnung eine Schwenkbewegung aus. In diesem Zusammenhang kann die wenigstens eine Hebelanordnung wenigstens eine Schwenkachse umfassen. Die wenigstens eine Schwenkachse kann dabei drehbar an dem wenigstens einen Maschinenrahmen gelagert sein.

Der wenigstens eine Maschinenrahmen kann eine Lagerfußanordnung umfassen. Über die Lagerfußanordnung kann sich der wenigstens eine Maschinenrahmen in der Produktionsposition an einem Untergrund abstützen. Die Lagerfüße der Lagerfußanordnung können zur Einstellung der Höhe der Überziehvorrichtung in der Produktionsposition dienen, d. h. in der Produktionsposition lässt sich die Vorrichtung über die in ihrer Höhe einstellbaren Lagerfüße stabilisieren.

Die wenigstens eine Hebelanordnung kann derart ausgebildet sein, dass die Lagerfußanordnung bzw. die einzelnen Lagerfüße der Lagerfußanordnung bei der Verlagerung der Vorrichtung zwischen der Produktionsposition und der Bewegungsposition in vertikaler Richtung bewegt werden. Mit anderen Worten wird die Vorrichtung bei der Verlagerung von der Produktionsposition in die Bewegungsposition angehoben bzw. "aufgebockt". Bei der umgekehrten Verlagerung, d.h. von der Bewegungsposition in die Produktionsposition wird die Vorrichtung dementsprechend abgesenkt.

Die wenigstens eine Hebelanordnung kann gemäß einer Ausführungsform der Erfindung ein Basiselement umfassen. An dem Basiselement kann wenigstens ein Bewegungselement zum Bewegen der Vorrichtung vorgesehen sein. Unter einem Bewegungselement ist in diesem Zusammenhang wenigstens ein Rad oder wenigstens eine Rolle, oder aber auch ein schienenförmiges Bewegungselement zu verstehen. Die wenigstens eine Hebelanordnung kann auch derart ausgebildet sein, dass mehrere Basiselemente vorhanden sind, an denen jeweils ein Bewegungselement wie eine Rolle oder ein Rad angeordnet ist.

Das wenigstens eine Bewegungselement kann gelenkig an dem wenigstens einen Basiselement angeordnet sein. Das wenigstens eine Bewegungselement kann über wenigstens einen Führungshebel bei der Verlagerung zwischen der Produktionsposition und der Bewegungsposition, insbesondere linear, geführt werden. Dadurch wird erreicht, dass die Überziehvorrichtung linear angehoben oder abgesenkt wird, auch wenn die wenigstens eine Hebelanordnung eine Schwenkbewegung ausführt. Das wenigstens eine Bewegungselement liegt in diesem Fall immer plan auf dem Untergrund auf.

Die Hebelanordnung kann wenigstens ein Vorspannmittel umfassen. Das Vorspannmittel kann derart angeordnet sein, dass es die Hebelanordnung in die der Bewegungsposition der Vorrichtung entsprechende Stellung vorspannt. Die wenigstens eine Hebelanordnung kann demnach derart ausgebildet sein, dass sie eine der Produktionsposition der Vorrichtung entsprechende Stellung und eine der Bewegungsposition der Vorrichtung entsprechende Stellung einnehmen kann.

Gemäß einer Ausführungsform der Erfindung kann die wenigstens eine Hebelanordnung in diesem Zusammenhang wenigstens ein erstes Hebelelement und wenigstens ein als Verriegelungselement dienendes zweites Hebelelement umfassen. Die wenigstens eine Hebelanordnung kann über das wenigstens eine erste Hebelelement betätigbar sein. Die Betätigung der wenigstens einen Hebelanordnung erfolgt vorzugsweise händisch über einen Bediener. Es ist jedoch auch denkbar, die Hebelanordnung automatisiert zu betätigen. Das wenigstens eine zweite Hebelelement, das als Verriegelungselement dient, kann die wenigstens eine Hebelanordnung in der der Bewegungsposition der Vorrichtung entsprechenden Stellung verriegeln. Das wenigstens eine zweite Hebelelement kann in seine Verriegelungsposition vorgespannt werden. Dadurch wird sichergestellt, dass, sobald sich die Vorrichtung in der Bewegungsposition befindet, die Hebelanordnungen nicht ohne Betätigung bzw. selbständig in ihre der Produktionsposition der Vorrichtung entsprechende Stellung zurückspringt. Somit können Schäden an der Vorrichtung und auch an der wenigstens einen Hebelanordnung verhindert werden. Aus der Verriegelungsstellung kann das wenigstens eine zweite Hebelelement nur durch eine von einem Nutzer bewusst ausgeführte Aktion in eine Entriegelungsstellung verlagert werden, in der die wenigstens eine Hebelanordnung freigegeben wird.

Das wenigstens eine erste Hebelelement und das wenigstens eine Basiselement können mit der wenigstens einen Schwenkachse verbunden und zusammen mit der wenigstens einen Schwenkachse bewegbar sein. Das wenigstens eine erste Hebelelement kann von der wenigstens einen Schwenkachse abnehmbar sein. Beispielsweise kann die wenigstens eine Schwenkachse ein Vierkant-Profil an ihrem Endbereich aufweisen, auf den das wenigstens eine erste Hebelelement aufgesteckt wird.

Das wenigstens eine Vorspannmittel kann sich zwischen dem wenigstens einen Basiselement und wenigstens einem Ausleger an dem wenigstens einen Maschinenrahmen erstrecken. Das wenigstens eine Vorspannmittel kann dabei derart angeordnet sein, dass es die Hebelanordnung über das wenigstens eine Basiselement in eine Schwenkbewegung um die Schwenkachse in Richtung der der Produktionsposition entsprechenden Stellung vorspannt.

Gemäß einer Ausführungsform der Erfindung können an dem wenigstens einen Maschinenrahmen zwei Hebelanordnungen vorgesehen sein. Die beiden Hebelanordnungen können jeweils wenigstens ein erstes Hebelelement zum Betätigen der entsprechenden Hebelanordnung aufweisen.

Im allgemeinen kann eine Überziehvorrichtung zum Überziehen von Produkten mit einer fließfähigen Überzugmasse weitere Komponenten wie z.B. ein Einlaufende und ein Auslaufende, ein angetriebenes gitterartiges endloses Förderband, auf dem die Produkte angeordnet und von dem Einlaufende zu dem Auslaufende in einer Förderrichtung gefördert werden, eine Überziehstation zum Anbringen der Überzugmasse an den Produkten, ein unterhalb des Förderbandes angeordnetes Gehäuse zum Auffangen der von den Produkten und dem Förderband abtropfenden oder abgeblasenen Überzugmasse und zum Rückführen dieser Überzugmasse zur Überziehstation, und einen beheizbaren Massetrog mit einer Rührschnecke zum Sammeln und Umwälzen der der Überzugmasse umfassen, wobei dem Massetrog über ein Leitungssystem eine Massepumpe zugeordnet ist, mit der aufgefangene Überzugmasse der Überziehstation zugeführt werden kann.

Im Folgenden wird eine beispielhafte Ausführungsform der vorliegenden Erfindung mit Bezug auf die beigefügten Figuren beschrieben. Es stellen dar:
- Figur 1: eine perspektivische Ansicht einer Überziehvorrichtung gemäß einer ersten Ausführungsform der Erfindung in der Produktionsposition;
- Figur 2: eine Seitenansicht der Vorrichtung gemäß Figur 1;
- Figur 3: eine perspektivische Ansicht der Überziehvorrichtung gemäß Figur 1 in der Bewegungsposition;
- Figur 4: eine Seitenansicht der Überziehvorrichtung gemäß Figur 3;
- Figur 5: eine perspektivische Ansicht einer Überziehvorrichtung gemäß einer zweiten Ausführungsform der Erfindung in der Produktionsposition;
- Figur 6: eine Seitenansicht der Vorrichtung gemäß Figur 5; und
- Figur 7: eine perspektivische Ansicht der Überziehvorrichtung gemäß Figur 5 in der Bewegungsposition; und
- Figur 8: eine Seitenansicht der Überziehvorrichtung gemäß Figur 7.

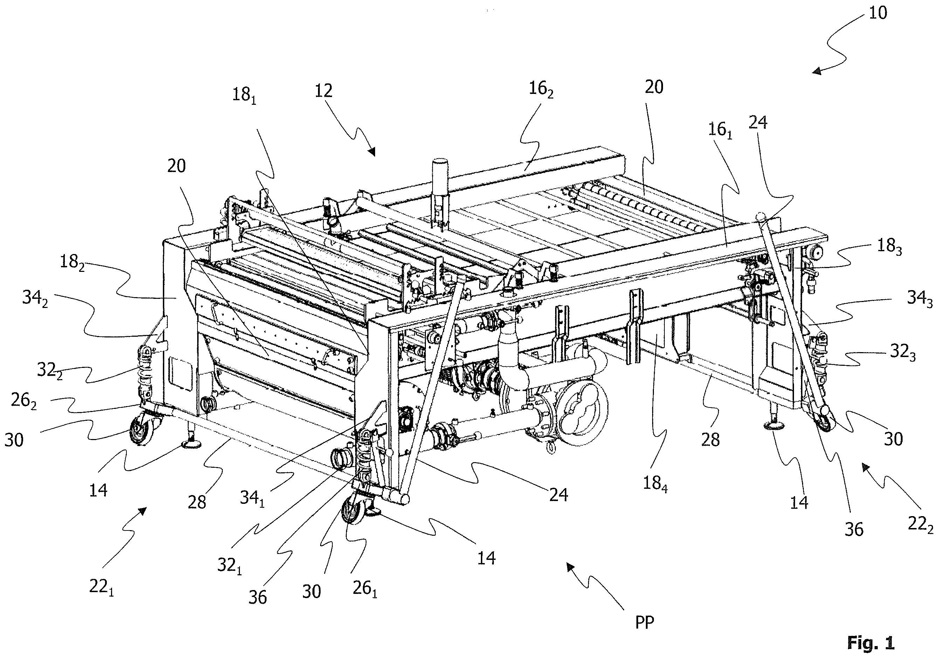

Figur 1 zeigt eine perspektivische Ansicht einer erfindungsgemäßen Überziehvorrichtung, die allgemein mit 10 bezeichnet ist.

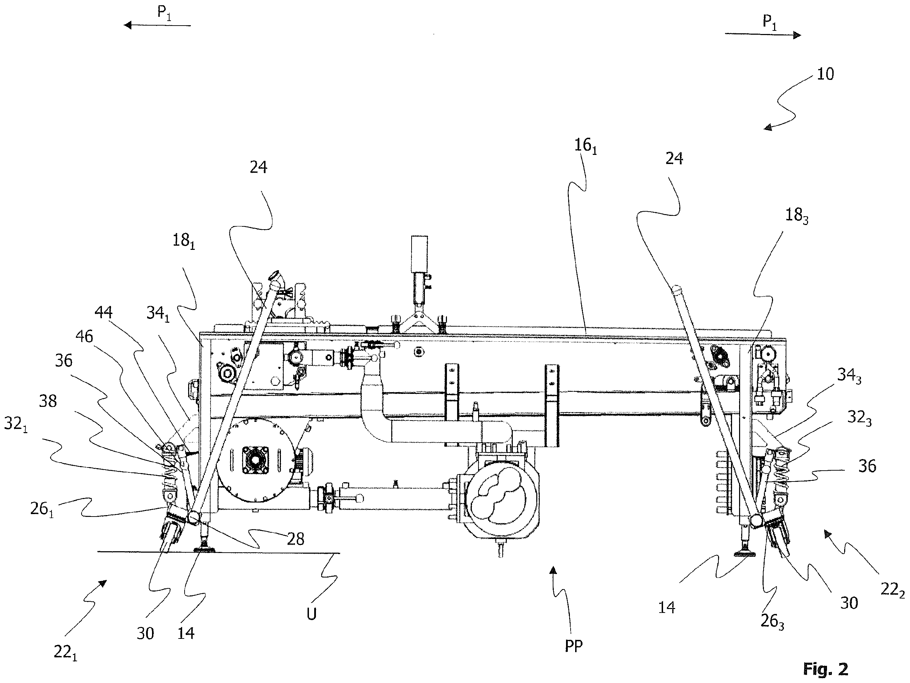

Die Überziehvorrichtung 10 befindet sich gemäß Figur 1 in der Produktionsposition PP, in der sich die Überziehvorrichtung 10 über den Maschinenrahmen 12 und Lagerfüße 14 an einem Untergrund U abstützt (Fig. 2). Die Lagerfüße 14 sind in ihrer Höhe einstellbar und dienen zur Stabilisierung der Überziehvorrichtung 10 in der Produktionsposition PP.

Der Maschinenrahmen 12 umfasst zwei Längsträger 16₁ und 16₂, an denen jeweils zwei sich in vertikaler Richtung erstreckende Stützen 18₁, 18₂ und 18₃, 18₄ vorgesehen sind. Die Längsträger 16₁ und 16₂ bzw. die Stützen 18₁, 18₂ und 18₃, 18₄ sind über eine Mehrzahl von Querelementen 20 verbunden.

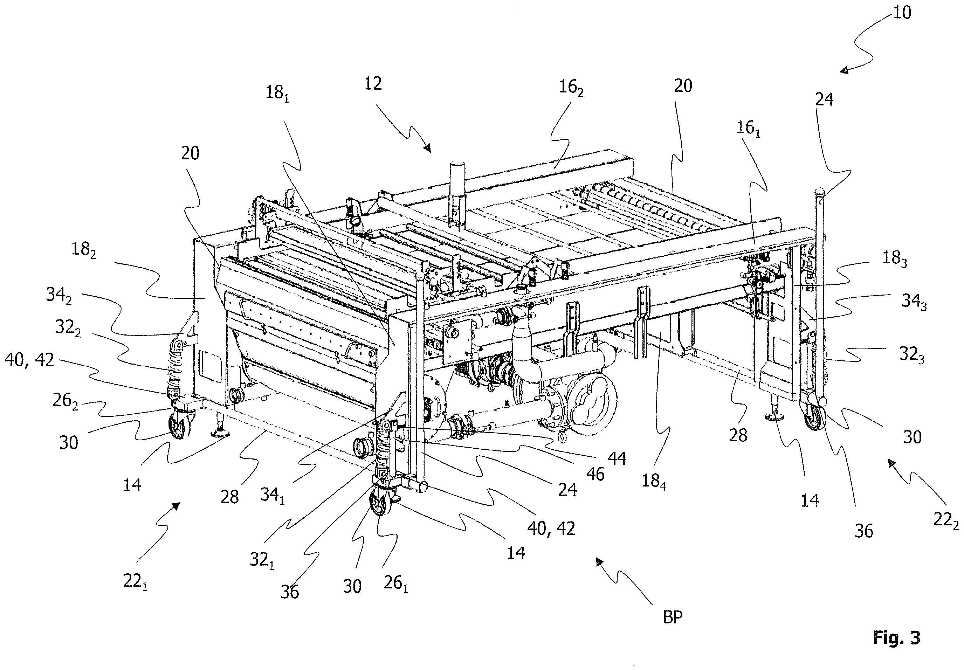

In Figur 1 erkennt man ferner die Hebelanordnungen 22₁ und 22₂, die zum Verlagern der Vorrichtung 10 von der in Figur 1 gezeigten Produktionsposition PP in die Bewegungsposition (Figur 3) und zurück dienen.

Die Hebelanordnungen 22₁ und 22₂ befinden sich gemäß Figur 1 erkennbar in ihrer der Produktionsposition PP der Vorrichtung 10 entsprechenden Stellung. Die Hebelanordnungen 22₁ und 22₂ umfassen jeweils ein erstes Hebelelement 24, mittels dem die Hebelanordnungen 22₁ und 22₂ betätigbar sind. Die Hebelanordnungen 22₁ und 22₂ umfassen ferner jeweils zwei Basiselemente 26₁ und 26₂. Die Basiselemente 26₁ und 26₂ sind über eine eine Schwenkachse bildende Stange 28 miteinander verbunden. An den plattenförmigen Basiselementen 26₁ und 26₂ sind jeweils in ihrer Stellung verdrehbare Rollen oder Räder 30 vorgesehen, die zum Verfahren der Überziehvorrichtung 10 in der Bewegungsposition (siehe Figur 3) benötigt werden. Die Hebel 24 werden in entgegengesetzte Richtung betätigt, d.h. jeweils in Richtung der entsprechenden Stütze 18₁ und 18₃. Die Hebel 24 können von der jeweils ihnen zugeordneten Schwenkachse 28 abnehmbar sein, und nur bei der Verlagerung der Überziehvorrichtung 10 von der Bewegungsposition BP in die Produktionsposition PP oder umgekehrt mit der Schwenkachse 28 verbunden werden.

Die Hebelanordnungen 22₁ und 22₂ sind an entgegengesetzten Seitenflächen der Stützen 18₁, 18₂ und 18₃, 18₄ vorgesehen, und sind im Wesentlichen identisch aufgebaut.

An den Basiselementen 26₁ und 26₂ ist jeweils ein Vorspannmittel 32₁ und 32₂ angeordnet. Das Vorspannmittel 32₁ und 32₂ erstreckt sich zwischen einem Ausleger 34₁, 34₂, die jeweils an den Stützen 18₁ und 18₂ vorgesehen sind, und einem der plattenförmigen Basiselementen 26₁ und 26₂. Zwischen dem Basiselement 26₁ und dem Ausleger 34₁ erstreckt sich ferner ein zweites Hebelelement . Das zweite Hebelelement 36 wirkt in der Bewegungsposition BP (siehe Figur 3) als Verriegelung, zum Halten der Überziehvorrichtung 10 in der Bewegungsposition PP.

Wie in Figur 1 erkennbar ist, ist zwischen dem Basiselement 26₂ und dem Ausleger 34₂ kein zweites Hebelelement vorgesehen, da an sich ein einziges zweites Hebelelement 36 zum Verriegeln der Hebelanordnung 22₁ ausreicht. Es kann jedoch auch ein zweites Hebelelement zwischen dem Basiselement 26₁ und dem Ausleger 34₁ vorgesehen sein.

In der Produktionsposition PP verläuft das erste Hebelelement 24 abgewinkelt zu den Stützen 18₁ und 18₂. Durch den abgewinkelten Verlauf des ersten Hebelelements 24 in der der Produktionsposition PP entsprechenden Stellung der Hebelanordnungen 22₁ und 22₂ werden die Räder 30 mittels der Basiselemente 26₁ und 26₂ vom Untergrund U abgehoben. Wie bereits erwähnt, sind die Basiselemente 26₁ und 26₂ über die Schwenkachse 28 mit dem ersten Hebelelement 24 verbunden, sodass jede Bewegung des Hebelelements 24 zu einer Bewegung der Basiselemente 26₁ und 26₂ mit den ihnen zugeordneten Rädern 30 führt. Anders ausgedrückt, verlaufen neben dem ersten Hebelelement 24 in der Produktionsposition auch die Rollen 30 abgewinkelt zu den Stützen 18₁ und 18₂, sodass die Hebelanordnungen 22₁ und 22₂ die Vorrichtung 10 nicht abstützen können.

Figur 2 zeigt einen Ausschnitt einer Seitenansicht der Überziehvorrichtung 10 gemäß Figur 1.

Die Überziehvorrichtung 10 befindet sich gemäß Figur 2 wiederum in der Produktionsposition PP. In der Produktionsposition PP stützt sich die Überziehvorrichtung 10 über den Maschinenrahmen 12 und die Lagerfüße 14 an einem Untergrund U ab.

In Figur 2 ist die an dem Maschinenrahmen 12 angeordnete Hebelanordnung 22₁ erkennbar. Die Hebelanordnung 22₁ befindet sich in ihrer der Produktionsposition PP entsprechenden Stellung. Der Hebel 24 und das Rad 30 verlaufen abgewinkelt zu der Stütze 18₁. Das Vorspannmittel 32₁ befindet sich in einem komprimierten Zustand, da es die Hebelanordnung 22₁ um die Schwenkachse 28 in die Bewegungsposition BP vorspannt, um einen Bediener bei der Überführung der Vorrichtung 10 in die Bewegungsposition BP unterstützen zu können. Das zweite Hebelelement 36 verläuft ebenfalls abgewinkelt zu dem Träger 18₁, und kann in dieser Stellung die Hebelanordnung 22 nicht verriegeln.

Das erste Hebelelement 24 und das Basiselement 26₁ sind im Wesentlichen in einem 90°-Winkel zueinander angeordnet. An der dem Untergrund zugewandten Fläche des Basiselements 26₁ ist die Rolle 30 vorgesehen. Zwischen dem Basiselement 26₁ und dem Ausleger 34₁ erstreckt sich das Vorspannmittel 32₁ und auch das zweite Hebelelement 36. Das Vorspannmittel 32₁ und das zweite Hebelelement 36 sind gelenkig jeweils an dem Ausleger 34₁ und dem Basiselement 26₁ angeordnet. Das Vorspannmittel 32₁ umfasst eine Feder 38 und zwei Befestigungselemente, über die das Vorspannmittel 32₁ gelenkig an dem Ausleger 34₁ und dem Basiselement 26₁ angebracht ist.

Aufgrund der Vorspannkraft des Vorspannmittel 32₁ werden die Rollen 30 auch in der Produktionsposition PP in Richtung des Untergrunds U gedrückt.

Der Hebel 24 wird in Richtung des Pfeils P₁ bewegt, um die Hebelanordnung 22₁ zu betätigen und die Vorrichtung 10 in die Bewegungsposition BP (Figur 3) zu verlagern.

Figur 3 zeigt eine perspektivische Ansicht der Überziehvorrichtung 10, wobei die Überziehvorrichtung 10 in die Bewegungsposition BP überführt wurde. Dies ist unter anderem dadurch erkennbar, dass das erste Hebelelement 24 nun parallel zu den Stützen 18₁ und 18₂ verläuft.

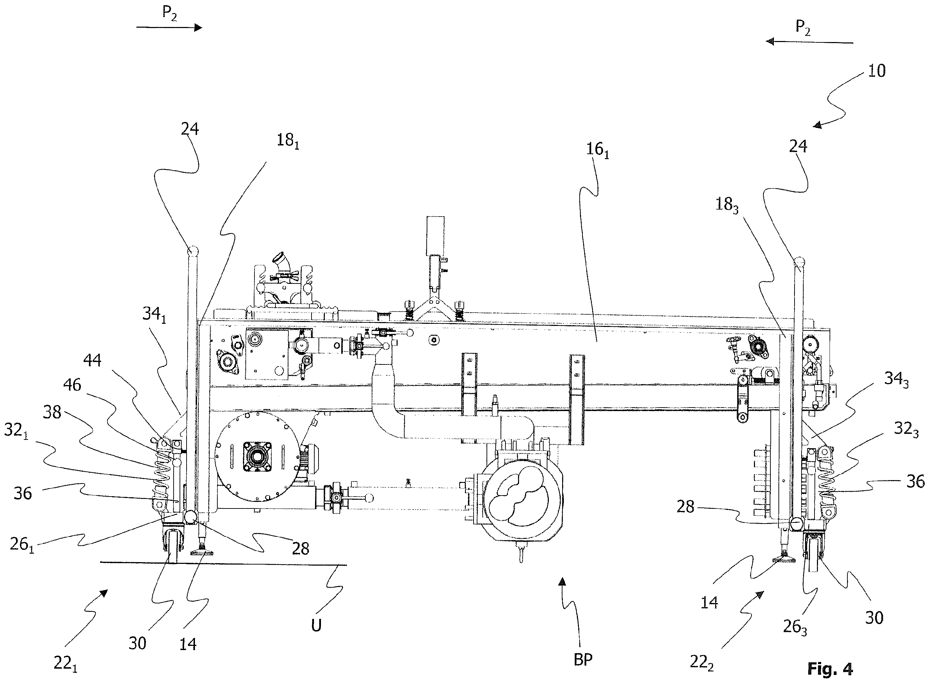

Die Hebelanordnungen 22₁ und 22₂ haben eine Schwenkbewegung um die Schwenkachse 28 ausgeführt, wodurch die Überziehvorrichtung 10 in vertikaler Richtung angehoben wurde. Die Basiselemente 26₁ und 26₂ erstrecken sich in der Bewegungsposition BP im Wesentlichen senkrecht zu den Stützen 18₁ und 18₂. In der Bewegungsposition BP sind die Lagerfüße 14 verglichen mit der Produktionsposition PP (Figuren 1 und 2) in vertikaler Richtung mittels der Hebelanordnungen 22₁, 22₂ angehoben worden. Die Überziehvorrichtung 10 stützt sich über die Hebelanordnungen 22₁, 22₂ und die Räder 30 an dem Untergrund U (Fig. 4) ab.

In Figur 3 ist nun auch die veränderte Position des zweiten Hebelelements 36 erkennbar, das sich wie die Vorspannmittel 32₁ und 32₂ parallel zu den Stützen 18₁ und 18₂ erstreckt. In dieser Position verriegelt das zweite Hebelelement 36 die Hebelanordnungen 22₁ und 22₂ in der Bewegungsposition BP, sodass eine unerwünschte Verlagerung der Hebelanordnungen 22₁, 22₂ und auch eine unerwünschte Verlagerung der Überziehvorrichtung 10 zurück in die Produktionsposition PP verhindert wird.

Die Vorspannmittel 32₁ und 32₂ bzw. deren Federn 38 unterstützen die Verlagerung der Überziehvorrichtung 10 von der Produktionsposition PP in die Bewegungsposition BP, da sie die Hebelanordnungen 22₁ und 22₂ in die der Bewegungsposition BP entsprechende Stellung vorspannen. Bei einer Betätigung der Hebelanordnungen 22₁ und 22₂ durch einen Bediener, d.h. die Betätigung erfolgt bevorzugt händisch, wird der Bediener durch die Federkraft der Vorspannmittel 32₁ und 32₂ unterstützt. Dies gilt insbesondere bei der Verlagerung der Vorrichtung 10 von der Produktionsposition PP in die Bewegungsposition BP, da der Bediener hier ansonsten ausschließlich über seine Handkraft die Vorrichtung bzw. deren Gewicht anheben bzw. "aufbocken" müsste.

Die Hebelanordnungen 22₁ und 22₂ sind über Lagerelemente 40 an den Stützen 18₁, 18₂ angebracht. Die Lagerelemente 40 sind in Ausnehmungen 42 in den Basiselementen 26₁ und 26₂ aufgenommen sind. Die Schwenkachse 28 kann sich beispielsweise durch die Lagerelemente 42 hindurch erstrecken.

Das zweite Hebelelement 36, das als Verriegelung wirkt, ist schwenkbar an dem Ausleger 34₁ angeordnet. Zwischen dem zweiten Hebelelement 36 und der Stütze 18₁ erstreckt sich eine Feder 44, die das zweite Hebelelement 36 in die Verriegelungsstellung vorspannt. Sobald das Basiselement 26₁ beim Schwenken in die Bewegungsposition BP in eine zur Stütze 18₁ senkrechte Stellung übergeht, wird das Hebelelement 36 durch die Federkraft der Feder 44 in die Verriegelungsstellung verlagert (Figuren 3 und 4). Um das zweite Hebelelement 36 zu entriegeln, muss die Überziehvorrichtung 10 leicht angehoben und ein Entriegelungszapfen 46 per Hand oder Fuß betätigt werden, um das zweite Hebelelement 36 in die Stellung gemäß der Figuren 1 und 2 zu verlagern, d.h. in die entriegelte Stellung.
Figur 4 zeigt eine Seitenansicht der Überziehvorrichtung 10 in der Bewegungsposition BP.

In Figur 4 ist erkennbar, dass die Lagerfüße 14 in der Bewegungsposition BP mittels der Hebelanordnungen 22₁, 22₂ vom Untergrund U abgehoben werden, und sich die Überziehvorrichtung 10 folglich über die Hebelanordnungen 22₁ und 22₂ bzw. die Rollen oder Räder 30 an dem Untergrund U abstützt.

Das erste Hebelelement 24, das zweite Hebelelement 36 und das Vorspannmittel 32₁ erstrecken sich in der Bewegungsposition BP parallel zu dem Träger 18₁. Um die Überziehvorrichtung 10 von der Produktionsposition PP in die Bewegungsposition BP zu verlagern, führt die Hebelanordnung 22₁, 22₂ eine Schwenkbewegung von etwa 20° um die Schwenkachse 28 aus, und wird dazu durch die Bewegung des Hebels 24 in Richtung des Pfeils P₁ veranlasst. Wird die Hebelanordnung 22₁ über das erste Hebelelement 24 betätigt, wird die Überziehvorrichtung 10 angehoben bzw. "aufgebockt". In dieser Position kann die Überziehvorrichtung 10 über die Rollen oder Räder 30 beispielsweise zu einer Waschstation (nicht gezeigt) gefahren oder es kann ein Überzugsmassenwechsel vorgenommen werden.

Bei vergleichender Ansicht der Figuren 2 und 4 wird erkennbar, dass das Vorspannmittel 32₁ sich in der Produktionsposition PP gemäß Figur 3 im komprimierten Zustand befindet, wohingegen es in der Bewegungsposition BP gemäß Figur 4 deutlich gestreckt ist.

Das zweite Hebelelement 36, das sich gemäß Figur 4 senkrecht zu dem Basiselement 26₁ in Richtung des Auslegers 34₁ erstreckt, kann der Bewegungsposition BP die Hebelanordnung 22₁ in ihrer der Bewegungsposition BP entsprechenden Stellung verriegeln, sodass ein unerwünschtes Absenken der Überziehvorrichtung 10 zurück in die Produktionsposition PP verhindert wird. Dadurch können Schäden an den Hebelanordnungen 22₁ und 22₂ und auch an der Überziehvorrichtung 10 verhindert werden.

Zum Verlagern der Vorrichtung 10 übt der Bediener im Allgemeinen über das erste rohrförmige Hebelelement 24 eine sich in Richtung der Pfeile P₁ und P₂ wirkende Handkraft aus. Die parallel zu den Stützen 18₁ und 18₂ wirkende Federkraft der Vorspannmittel 32₁ und 32₂ dient zur Unterstützung des Bedieners, der entsprechend eine kleinere Handkraft aufbringen muss. Durch die Handkraft des Bedieners und die Federkraft der Vorspannmittel 32₁ und 32₂ wird ein Moment um die Schwenkachse 28 erzeugt, dass zum Verlagern der Überziehvorrichtung 10 aus der Produktionsposition PP (Figuren 1 und 2) in die Bewegungsposition BP (Figuren 3 und 4) ausreichend ist. Bei der Verlagerung der Vorrichtung 10 aus der Produktionsposition PP in die Bewegungsposition BP wird die Hebelanordnung 22₁ in Richtung des Pfeils P₁ in den Figuren 1 und 2 betätigt, so dass die Verlagerung durch die Federkraft der Vorspannmittel 32₁ und 32₂ unterstützt wird. Wurde die Überziehvorrichtung 10 in die Bewegungsposition BP verlagert, wird die Hebelanordnung 22₁, 22₂ in dieser Position durch das zweite Hebelelement 36 verriegelt. Sobald das Basiselement 26₁, 26₂ in einer Stellung in etwa parallel zum Untergrund U ist, wird das zweite Hebelelement 36 durch die Feder 44 in seine Verriegelungsstellung verlagert (Figuren 3 und 4). Bei einer Verlagerung der Vorrichtung 10 von der Bewegungsposition BP in die Produktionsposition PP muss zunächst das zweite Hebelelement 36 von einem Bediener aus seiner Verriegelungsstellung in die Entriegelungsstellung (Figuren 1 und 2) verlagert werden. Erst dann kann die Hebelanordnung 22₁ in Richtung des Pfeils P₂ betätigt, und die Überziehvorrichtung 10 entsprechend abgesenkt werden.

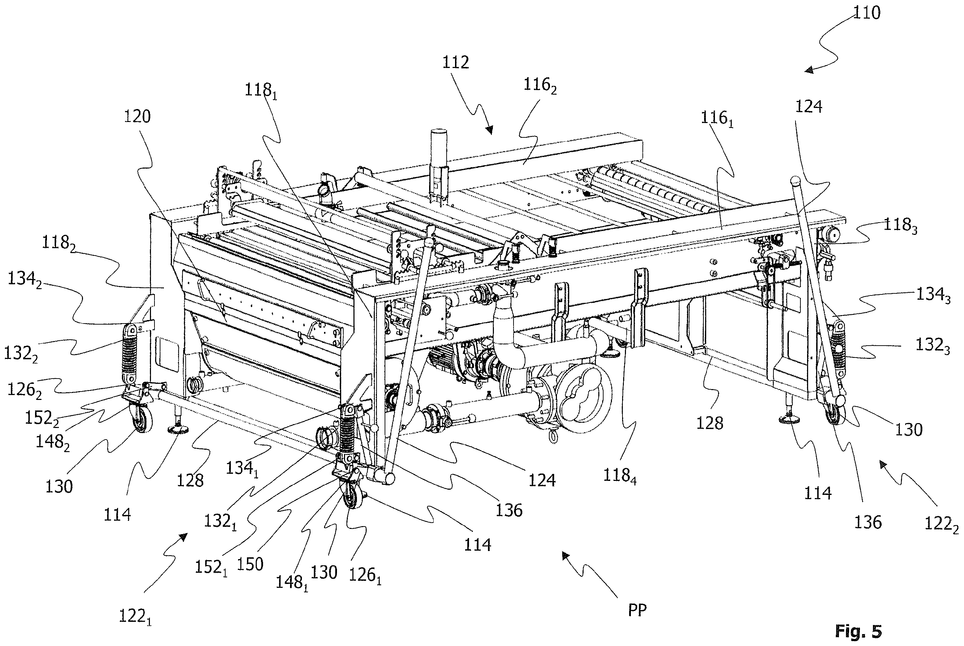

Die Figuren 5 bis 8 zeigen Ansichten einer Überziehvorrichtung 110 gemäß einer zweiten Ausführungsform der Erfindung. Für gleichartige und gleichwirkende Komponenten werden die selben Bezugszeichen verwendet wie bei der ersten Ausführungsform, jedoch mit der Ziffer "1" vorangestellt.

Die Überziehvorrichtung 110 entspricht weitestgehend der Überziehvorrichtung 10, die mit Bezug auf die Figuren 1 bis 4 beschrieben wurde.

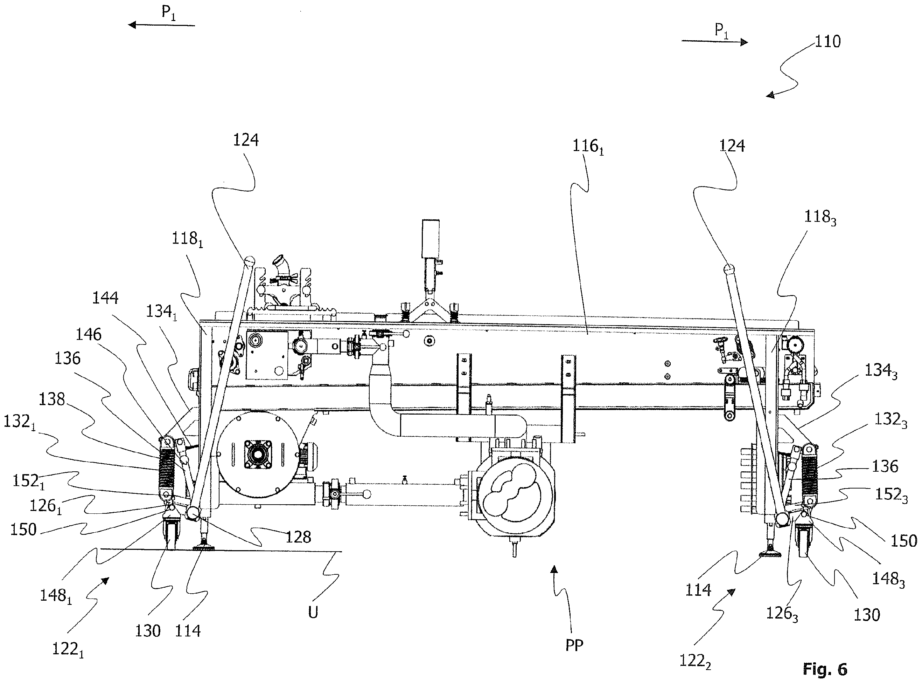

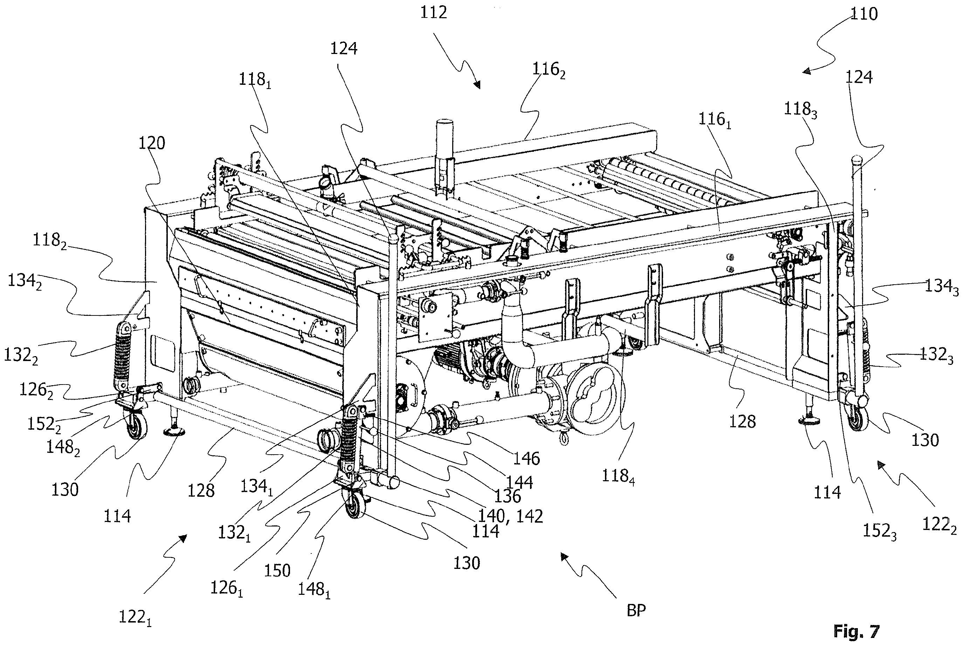

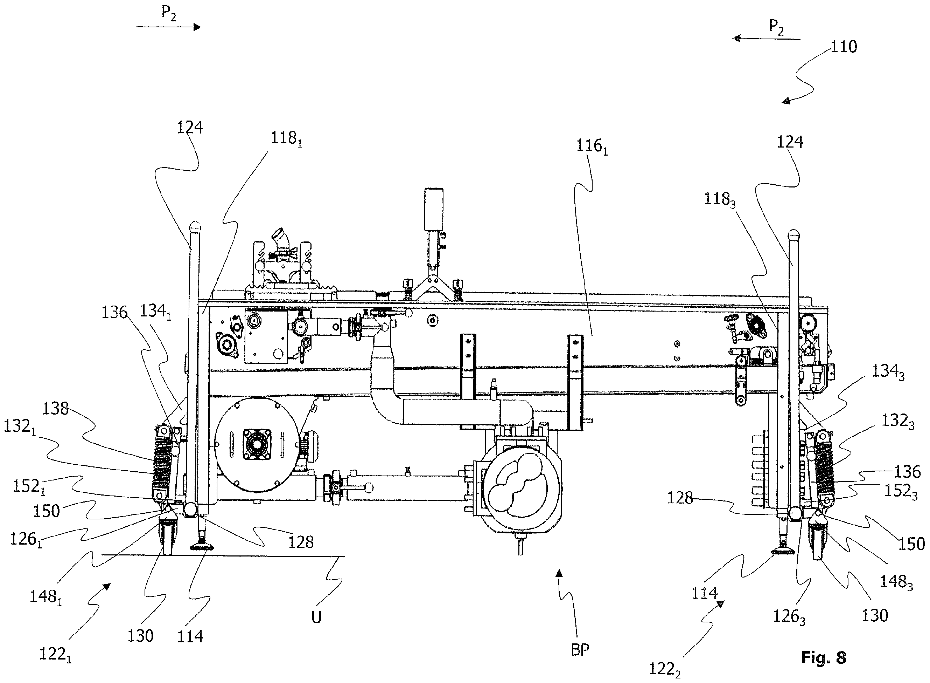

In den Figur 5 und 6 ist die Überziehvorrichtung 110 in der Produktionsposition PP und in den Figuren 7 und 8 in der Bewegungsposition BP gezeigt.

In den Figuren 5 und 6 befinden sich die Hebelanordnungen 112₁ und 122₂ in ihrer der Produktionsposition PP der Vorrichtung 110 entsprechenden Stellung. Die Hebelanordnungen 122₁ und 122₂ umfassen jeweils ein erstes Hebelelement 124, mittels dem die Hebelanordnungen 122₁ und 122₂ betätigbar sind. Die Hebelanordnungen 122₁ und 122₂ umfassen ferner jeweils zwei Basiselemente 126₁ und 126₂. Die Basiselemente 126₁ und 126₂ sind über eine Schwenkachse 128 miteinander verbunden.

An den plattenförmigen Basiselementen 126₁ und 126₂ sind über eine Halterung 148 jeweils die in ihrer Stellung verdrehbaren Rollen 130 gelenkig angebracht. Die Halterung 148 ist über einen oder mehrere Zapfen 150 an den Basiselementen 126₁ und 126₂ schwenkbar angebracht. Die Halterung 148 ist mit einem Führungshebel 152₁, 152₂, 152₃ gelenkig verbunden, der wiederum an den Stützen 118₁, 118₂ und 118₃, 118₄ schwenkbar befestigt ist. Der Führungshebel 152₁, 152₂, 152₃ dient zur Führung der Halterung 148 und der Rollen 130. Der Führungshebel 152₁, 152₂, 152₃ sorgt zusammen mit der Halterung 148 und dem Zapfen 150 dafür, dass sie Rollen 130 linear gehalten werden. Der Führungshebel 152₁, 152₂, 152₃ und das Basiselement 126₁, 126₂, 126₃ bilden zusammen mit der Stütze 118₁, 118₂, 118₃ sowie der Halterung 148 eine parallelogramartige Anordnung.

Unabhängig von der Schwenkbewegung der Hebelanordnung 122₁ und 122₂ sorgt der Führungshebel 152₁, 152₂, 152₃ dafür, dass die Rollen 130 linear geführt werden, und eine Bewegung parallel zu den Stützen 118₁, 118₂, 118₃ ausführen. Dies wird aus einer Zusammenschau der Figuren 5 bis 8 deutlich. Durch die Führung der Rollen 130 über die Halterung 148 und den Führungshebel 152₁, 152₂, 152₃ wird erreicht, dass die Rollen 130 in jeder Stellung der Hebelanordnung 122 plan auf den Untergrund U aufliegen (Figuren 5 bis 8). Die Überziehvorrichtung 110 kann dementsprechend linear angehoben oder abgesenkt werden. Insbesondere beim Anheben der Überziehvorrichtung 110 ist dies für Kraftübertragung vorteilhaft. Ferner hilft dieses Merkmal dabei, dass die Überziehvorrichtung 110 beim Absenken je nach Bedarf in Position gehalten werden kann.

Bis auf die voranstehend beschriebene Führung der Rollen 130 ist die Funktionsweise der zweiten Ausführungsform identisch zu der der ersten Ausführungsform.

## Patentansprüche

1. Vorrichtung (10) zum Überziehen von Produkten, insbesondere Lebensmittelprodukten, mit fließfähigen Überzugsmassen, mit
- wenigstens einem Maschinenrahmen (12), über den sich die Vorrichtung (10) in einer Produktionsposition an einem Untergrund (U) abstützt, und
- wenigstens einer Hebelanordnung (22₁, 22₁), die zum Verlagern der Vorrichtung (10) zwischen der Produktionsposition (PP) und einer Bewegungsposition (BP) ausgebildet ist, in der die Vorrichtung (10) relativ bewegbar ist.

2. Vorrichtung (10) nach Anspruch 1,
wobei die wenigstens eine Hebelanordnung (22₁, 22₂) die Vorrichtung (10) in der Bewegungsposition (BP) abstützt.

3. Vorrichtung (10) nach Anspruch 1 oder 2,
wobei die wenigstens eine Hebelanordnung (22₁, 22₂) die Vorrichtung (10) über eine Schwenkbewegung zwischen der Produktionsposition (PP) und der Bewegungsposition (BP) verlagert.

4. Vorrichtung (10) nach Anspruch 3,
wobei die wenigstens eine Hebelanordnung (22₁, 22₂) wenigstens eine Schwenkachse (28) umfasst, die drehbar an dem wenigstens einen Maschinenrahmen (12) gelagert ist.

5. Vorrichtung (10) nach einem der Ansprüche 1 bis 4,
wobei der wenigstens eine Maschinenrahmen (12) eine Lagerfußanordnung (14) umfasst, über die sich der wenigstens eine Maschinenrahmen (12) in der Produktionsposition (PP) an einem Untergrund abstützt.

6. Vorrichtung (10) nach Anspruch 5,
wobei die wenigstens eine Hebelanordnung (22₁, 22₂) derart ausgebildet ist, dass die Lagerfußanordnung (14) bei der Verlagerung der Vorrichtung (10) zwischen der Produktionsposition (PP) und der Bewegungsposition (BP) in vertikaler Richtung bewegbar ist.

7. Vorrichtung (10) nach einem der Ansprüche 1 bis 6,
wobei die wenigstens eine Hebelanordnung (22₁, 22₂) wenigstens ein Basiselement (26₁, 26₂, 26₃) umfasst, an dem wenigstens ein Bewegungselement (30) zum Bewegen der Vorrichtung (10) angeordnet ist.

8. Vorrichtung (110) nach Anspruch 7,
wobei das wenigstens eine Bewegungselement (130) schwenkbar an dem wenigstens einen Basiselement (126₁, 126₂, 126₃) angebracht ist.

9. Vorrichtung nach Anspruch 8,
wobei das wenigstens eine Bewegungselement (130) über wenigstens einen Führungshebel (152₁, 152₂, 152₃) bei der Verlagerung zwischen der Produktionsposition (PP) und der Bewegungsposition (BP), insbesondere linear, geführt ist.

10. Vorrichtung (10) nach einem Ansprüche 1 bis 9,
wobei die Hebelanordnung (22₁, 22₂) wenigstens ein Vorspannmittel (32₁, 32₂, 32₃) umfasst, das die wenigstens eine Hebelanordnung (22₁, 22₂) in eine der Bewegungsposition (BP) entsprechende Stellung vorspannt.

11. Vorrichtung (10) nach einem der Ansprüche 1 bis 10,
wobei die wenigstens eine Hebelanordnung (22₁, 22₂) wenigstens ein erstes Hebelelement (24) und wenigstens eine zweites Hebelelement (36) umfasst, und die wenigstens eine Hebelanordnung (22₁, 22₂) über das wenigstens eine erste Hebelelement (24) betätigbar ist, wobei das wenigstens eine zweite Hebelelement (36) die wenigstens eine Hebelanordnung (22₁, 22₂) in der der Bewegungsposition (BP) entsprechenden Stellung verriegelt.

12. Vorrichtung (10) nach einem der Ansprüche 4 bis 11,
wobei das wenigstens eine erste Hebelelement (24) und das wenigstens eine Basiselement (26₁, 26₂, 26₃) mit der wenigstens einen Schwenkachse (18) verbunden und zusammen mit der wenigstens einen Schwenkachse (18) bewegbar sind.

13. Vorrichtung (10) nach einem der Ansprüche 7 bis 12,
wobei sich das wenigstens eine Vorspannmittel (32₁, 32₂, 32₃) zwischen dem wenigstens einen Basiselement (26₁, 26₂, 26₃) und wenigstens einem Ausleger (34₁, 34₂, 34₃) an dem Maschinenrahmen erstreckt.

14. Vorrichtung (10) nach einem der Ansprüche 1 bis 13,
wobei an dem wenigstens einen Maschinenrahmen (12) zwei Hebelanordnungen (22₁, 22₂) vorgesehen sind, und jeweils wenigstens ein erstes Hebelelement (24) zum Betätigen der entsprechenden Hebelanordnung (22₁, 22₂) aufweisen.

## Claims

1. A device (10) for coating products, in particular food products, with free-flowing coating materials, having
- at least one machine frame (12) via which the device (10) in a production position is supported on a base surface (U), and
- at least one lever assembly (22₁, 22₁) that is designed for displacing the device (10) between the production position (PP) and a movement position (BP) in which the device (10) is relatively movable.

2. The device (10) according to Claim 1,
wherein the at least one lever assembly (22₁, 22₂) supports the device (10) in the movement position (BP).

3. The device (10) according to Claim 1 or 2,
wherein the at least one lever assembly (22₁, 22₂) displaces the device (10) between the production position (PP) and the movement position (BP) via a swivel movement.

4. The device (10) according to Claim 3,
wherein the at least one lever assembly (22₁, 22₂) includes at least one swivel axis (28) that is rotatably supported on the at least one machine frame (12).

5. The device (10) according to one of Claims 1 to 4,
wherein the at least one machine frame (12) includes a bearing foot assembly (14) via which the at least one machine frame (12) is supported on a base surface in the production position (PP).

6. The device (10) according to Claim 5,
wherein the at least one lever assembly (22₁, 22₂) is designed in such a way that the bearing foot assembly (14) is movable in the vertical direction when the device (10) is displaced between the production position (PP) and the movement position (BP).

7. The device (10) according to one of Claims 1 to 6,
wherein the at least one lever assembly (22₁, 22₂) includes at least one base element (26₁, 26₂, 26₃) on which at least one movement element (30) for moving the device (10) is situated.

8. The device (110) according to Claim 7,
wherein the at least one movement element (130) is pivotably mounted on the at least one base element (126₁, 126₂, 126₃).

9. The device according to Claim 8,
wherein the at least one movement element (130) is guided, in particular linearly, via at least one guide lever (152₁, 152₂, 152₃) during the displacement between the production position (PP) and the movement position (BP).

10. The device (10) according to one of Claims 1 to 9,
wherein the lever assembly (22₁, 22₂) includes at least one pretensioning means (32₁, 32₂, 32₃) that pretensions the at least one lever assembly (22₁, 22₂) in a position corresponding to the movement position (BP).

11. The device (10) according to one of Claims 1 to 10,
wherein the at least one lever assembly (22₁, 22₂) includes at least one first lever element (24) and at least one second lever element (36), and the at least one lever assembly (22₁, 22₂) is actuatable via the at least one first lever element (24), wherein the at least one second lever element (36) locks the at least one lever assembly (22₁, 22₂) in the position corresponding to the movement position (BP).

12. The device (10) according to one of Claims 4 to 11,
wherein the at least one first lever element (24) and the at least one base element (26₁, 26₂, 26₃) are connected to the at least one swivel axis (18), and are movable together with the at least one swivel axis (18).

13. The device (10) according to one of Claims 7 to 12,
wherein the at least one pretensioning means (32₁, 32₂, 32₃) extends between the at least one base element (26₁, 26₂, 26₃) and at least one cantilever arm (34₁, 34₂, 34₃) on the machine frame.

14. The device (10) according to one of Claims 1 to 13,
wherein two lever assemblies (22₁, 22₂) are provided on the at least one machine frame (12), and each has at least one first lever element (24) for actuating the corresponding lever assembly (22₁, 22₂).

## Revendications

1. Dispositif (10) pour revêtir des produits, en particulier des produits alimentaires, avec des substances de revêtement fluides, comprenant
- au moins un bâti de machine (12) par l'intermédiaire duquel le dispositif (10) s'appuie sur un sol (U) dans une position de production et
- au moins un système de leviers (22₁, 22₁) qui est conçu pour transférer le dispositif (10) entre la position de production (PP) et une position de déplacement (BP) dans laquelle le dispositif (10) est relativement mobile.

2. Dispositif (10) selon la revendication 1,
dans lequel ledit au moins un système de leviers (22₁, 22₂) supporte le dispositif (10) dans la position de déplacement (BP).

3. Dispositif (10) selon la revendication 1 ou 2,
dans lequel ledit au moins un système de leviers (22₁, 22₂) transfère le dispositif (10) entre la position de production (PP) et la position de déplacement (BP) par un mouvement pivotant.

4. Dispositif (10) selon la revendication 3,
dans lequel ledit au moins un système de leviers (22₁, 22₂) comprend au moins un axe de pivotement (28) qui est monté rotatif sur ledit au moins un bâti de machine (12).

5. Dispositif (10) selon l'une des revendications 1 à 4,
dans lequel ledit au moins un bâti de machine (12) comprend un agencement de pieds de support (14) par l'intermédiaire duquel ledit au moins un bâti de machine (12) s'appuie sur un sol dans la position de production (PP).

6. Dispositif (10) selon la revendication 5,
dans lequel ledit au moins un système de leviers (22₁, 22₂) est conçu de telle sorte que l'agencement de pieds de support (14) peut être déplacé dans la direction verticale lors du transfert du dispositif (10) entre la position de production (PP) et la position de déplacement (BP).

7. Dispositif (10) selon l'une des revendications 1 à 6,
dans lequel ledit au moins un système de leviers (22₁, 22₂) comprend au moins un élément de base (26₁, 26₂, 26₃) sur lequel est disposé au moins un élément de déplacement (30) pour déplacer le dispositif (10).

8. Dispositif (110) selon la revendication 7,
dans lequel ledit au moins un élément de déplacement (130) est monté pivotant sur ledit au moins un élément de base (126₁, 126₂, 126₃).

9. Dispositif selon la revendication 8,
dans lequel ledit au moins un élément de déplacement (130) est guidé par l'intermédiaire d'au moins un levier de guidage (152₁, 152₂, 152₃) lors du transfert entre la position de production (PP) et la position de déplacement (BP), en particulier de manière linéaire.

10. Dispositif (10) selon l'une des revendications 1 à 9,
dans lequel le système de leviers (22₁, 22₂) comprend au moins un moyen de précontrainte (32₁, 32₂, 32₃) qui précontraint ledit au moins un système de leviers (22₁, 22₂) dans une position correspondant à la position de déplacement (BP).

11. Dispositif (10) selon l'une des revendications 1 à 10,
dans lequel ledit au moins un système de leviers (22₁, 22₂) comprend au moins un premier élément formant levier (24) et au moins un deuxième élément formant levier (36), et ledit au moins un système de leviers (22₁, 22₂) peut être actionné par ledit au moins un premier élément formant levier (24), ledit au moins un deuxième élément formant levier (36) verrouillant ledit au moins un système de leviers (22₁, 22₂) dans la position correspondant à la position de déplacement (BP).

12. Dispositif (10) selon l'une des revendications 4 à 11,
dans lequel ledit au moins un premier élément formant levier (24) et ledit au moins un élément de base (26₁, 26₂, 26₃) sont reliés audit au moins un axe de pivotement (18) et peuvent être déplacés ensemble avec ledit au moins un axe de pivotement (18).

13. Dispositif (10) selon l'une des revendications 7 à 12,
dans lequel ledit au moins un moyen de précontrainte (32₁, 32₂, 32₃) s'étend entre ledit au moins un élément de base (26₁, 26₂, 26₃) et au moins un élément en porte-à-faux (34₁, 34₂, 34₃) sur le bâti de machine.

14. Dispositif (10) selon l'une des revendications 1 à 13,
dans lequel deux systèmes de leviers (22₁, 22₂) sont prévus sur ledit au moins un bâti de machine (12) et présentent chacun au moins un premier élément formant levier (24) pour actionner le système de leviers (22₁, 22₂) correspondant.
